Europäisches Patentamt

European Patent Office

Office européen des brevets

(11) Veröffentlichungsnummer : **0 261 544 B1**

## (12) EUROPÄISCHE PATENTSCHRIFT

(45) Veröffentlichungstag der Patentschrift :
02.01.91 Patentblatt 91/01

(51) Int. Cl.$^5$ : **G21C 3/32, G21C 3/34**

(21) Anmeldenummer : **87113414.4**

(22) Anmeldetag : **14.09.87**

(54) **Kernreaktorbrennelement.**

(30) Priorität : **25.09.86 DE 3632627**

(43) Veröffentlichungstag der Anmeldung :
**30.03.88 Patentblatt 88/13**

(45) Bekanntmachung des Hinweises auf die
Patenterteilung :
**02.01.91 Patentblatt 91/01**

(84) Benannte Vertragsstaaten :
**BE DE ES FR GB SE**

(56) Entgegenhaltungen :
**EP-A- 0 148 452**

(56) Entgegenhaltungen :
**EP-A- 0 185 219**
**DE-A- 1 564 697**
**DE-B- 1 134 870**
**FR-A- 2 578 348**
**US-A- 3 395 077**

(73) Patentinhaber : **Siemens Aktiengesellschaft**
**Wittelsbacherplatz 2**
**D-8000 München 2 (DE)**

(72) Erfinder : **Bökers, Franz-Josef**
**Dr. Konrad-Adenauer-Strasse 11**
**D-8510 Fürth 18 (DE)**
Erfinder : **Steinke, Alexander**
**Stettinger Strasse 13**
**D-8553 Ebermannstadt (DE)**

**EP 0 261 544 B1**

**Beschreibung**

Die Erfindung betrifft ein Kernreaktorbrennelement nach dem Gattungsbegriff des Patentanspruchs 1.

Ein derartiges Kernreaktorbrennelement ist aus der European Patent Application EP-A-0 148 452 bekannt. Das Zusatzgitter dieses bekannten Kernreaktorbrennelementes hat quadratische Maschen und ist durch sich rechtwinklig durchsetzende innere Blechstege aus Metall gebildet. Auf der Außenseite des Kernreaktorbrennelementes weist das Zusatzgitter vier Außenstege auf, die einen quadratischen Umfang des Zusatzgitters definieren und die an den jeweils zu ihnen rechtwinkligen inneren Blechstegen befestigt sind. Das Zusatzgitter weist an seiner durch die inneren Blechstege gebildeten Oberfläche in den Maschen starre Anlagenoppen für die Brennstäbe auf und ist an jeder durch einen inneren Blechsteg gebildeten Abströmkante der Maschen für die Brennstäbe mit einer einzigen Verwirbelungsfahne versehen.

Die Verwirbelungsfahnen dienen zur Durchmischung des Kühlmittels, z.B. Wasser, das das Kernreaktorbrennelement in einem Kernreaktor, z.B. Druckwasserkernreaktor, in Längsrichtung durchströmt. Die Durchmischung des Kühlmittels soll verhindern, daß das Kühlmittel über den Querschnitt des Kernreaktorbrennelementes gesehen ungleichmäßig erhitzt wird und daß gerade am stärksten aufgeheizte und damit am stärksten belastete Brennstäbe des Kernreaktorbrennelementes nicht genügend gekühlt werden. Das Durchmischungsgitter führt jedoch zu erheblichen Druckverlusten im Kühlmittel.

Der Erfindung liegt die Aufgabe zugrunde, diese Druckverluste herabzusetzen.

Zur Lösung dieser Aufgabe hat ein Kernreaktorbrennelement der eingangs erwähnten Art erfindungsgemäß die Merkmale des kennzeichnenden Teiles des Patentanspruchs 1.

Es hat sich gezeigt, daß auf diese Weise eine gleichmäßige Erhitzung des Kühlmittels im Kernreaktor auch bei verringerter Größe und/oder verringerter Anzahl der Verwirbelungsfahnen an den Abstandhaltern erzielt wird. Die Abstandhalter können sogar überhaupt keine Verwirbelungsfahnen aufweisen, was zu besonders geringen Druckverlusten im Kühlmittels führt. Auch sind Abstandhalter ohne Verwirbelungsfahnen kostengünstiger herzustellen.

Eine noch weitergehende Verringerung dieser Druckverluste kann mit den Merkmalen des Unteranspruchs 2 erzielt werden.

Von Vorteil ist ferner, wenn das Kernreaktorbrennelement die Merkmale des Unteranspruchs 5 hat, was eine weitergehende Vergleichmäßigung der Temperatur des das Kernreaktorbrennelement in einem Kernreaktor durchströmenden Kühlmittels bei zugleich geringen Druckverlusten für das Kühlmittel bewirkt.

Günstig kann es sein, wenn das Zusatzgitter von beiden Abstandhaltern ungleichen Abstand hat. Dies bewirkt, daß in einem Kernreaktor Turbulenzen abklingen, die in dem das Kernreaktorbrennelement durchströmenden flüssigen Kühlmittel durch einen Abstandhalter hervorgerufen werden, so daß das Kühlmittel wieder in einer gleichmäßigen Strömung zum Zusatzgitter gelangt und die Verwirbelungsfahnen des Zusatzgitters optimal wirksam werden können. Auf dem Weg bis zum nächsten Abstandhalter erfolgt dann ein besserer Wärmeübergang an das Kühlmittel.

Die Erfindung und ihre Vorteile seien anhand der Zeichnung an einem Ausführungsbeispiel näher erläutert:

FIG 1 zeigt in Seitenansicht und stark schematisiert ein Kernreaktorbrennelement für einen Druckwasserkernreaktor.

FIG 2 zeigt vergrößert einen Längsschnitt durch das Kernreaktorbrennelement nach FIG 1.

FIG 3 zeigt eine Draufsicht, d.h. eine Ansicht der Abströmseite des Zusatzgitters am Kernreaktorbrennelement nach den Figuren 1 und 2.

FIG 4 zeigt in perspektivischer Darstellung Verwirbelungsfahnen, die am Zusatzgitter des Kernreaktorbrennelementes nach den Figuren 1 bis 3 oder an einem Abstandhalter eines Kernreaktorbrennelementes angebracht sein können.

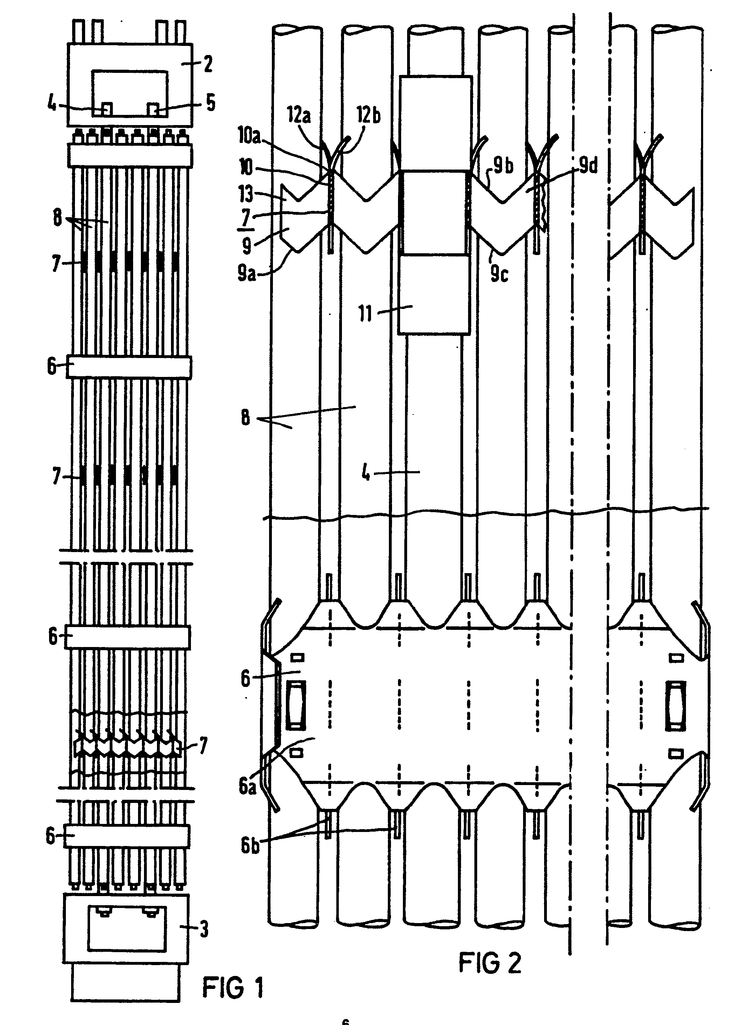

Das Kernreaktorbrennelement nach FIG 1 ist für einen Druckwasserkernreaktor bestimmt und weist zwei quadratische Halteplatten 2 und 3 aus Metall auf. Ferner sind zwei Führungsrohre 4 und 5 aus Metall für je einen Steuerstab erkennbar, deren Längsachsen die beiden zueinander parallelen Halteplatten 2 und 3 in einem Winkel von 90° durchdringen und die an jedem Ende jeweils an einer der beiden Halteplatten 2 und 3 festgeschraubt sind. Jedes Führungsrohr 4 bzw. 5 ist durch eine quadratische Masche in quadratischen gitterförmigen Abstandhaltern 6 mit äußeren und inneren Blechstegen 6a und 6b geführt, die sich in Längsrichtung des Führungsrohres 4 gesehen zwischen den beiden Halteplatten 2 und 3 befinden und die an den Führungsrohren 4 und 5 formschlüssig gehaltert, z.B. festgeschweißt sind. Durch andere Maschen der Abstandhalter 6 ist jeweils ein zu den Führungsrohren 4 und 5 paralleler Brennstab 8 geführt, der im wesentlichen aus einem mit Kernbrennstoff gefüllten Hüllrohr aus Metall besteht, das an beiden Enden gasdicht verschlossen ist. Die Brennstäbe 8 sind an keiner der beiden Halteplatten 2 und 3 befestigt, sondern sie sind in den Maschen der Abstandhalter 6 elastisch, d.h. kraftschlüssig durch nicht erkennbare Federn und starre Anlagenoppen der Abstandhalter 6 gehaltert und haben zwischen den beiden Halteplatten 2 und 3 in Richtung ihrer Längsachse Spiel. Sie können sich deshalb in ihrer Längsrichtung, d.h. der Längsrichtung des Kernreaktorbrennelementes ungehindert ausdehnen. Die Abstandhalter 6 weisen insbesondere an den inneren Blechstegen 6b keine verdrillten Verwirbelungsfahnen auf, die über die Maschenseiten hervorstehen.

Jeweils zwischen zwei Abstandhaltern 6 weist das Kernreaktorbrennelement in ungleichem Abstand zu den beiden benachbarten Abstandhaltern 6 ein Zusatzgitter 7 mit sich hochkant rechtwinklig durchsetzenden Blechstegen 9 und 10 auf, welche quadratische Maschen bilden, in denen sich jeweils einer der Brennstäbe 8 bzw. ein Führungsrohr 4 oder 5 befindet.

Während die Brennstäbe 8 mit Abstand von den Blechstegen 9 und 10, d.h. also lose und mit Spiel durch die Maschen des Zusatzgitters 7 geführt sind, sitzt auf den Führungsrohren 4 und 5 eine Metallhülse 11, die an der Innenfläche mit dem Führungsrohr 4 bzw. 5 verschweißt ist. Die Metallhülse 11 ist ihrerseits an ihrer Außenseite mit jeweils vier Blechstegen 9 und 10 verschweißt, die die Masche des Zusatzgitters 7 bilden, in der sich das Führungsrohr 4 bzw. 5 befindet.

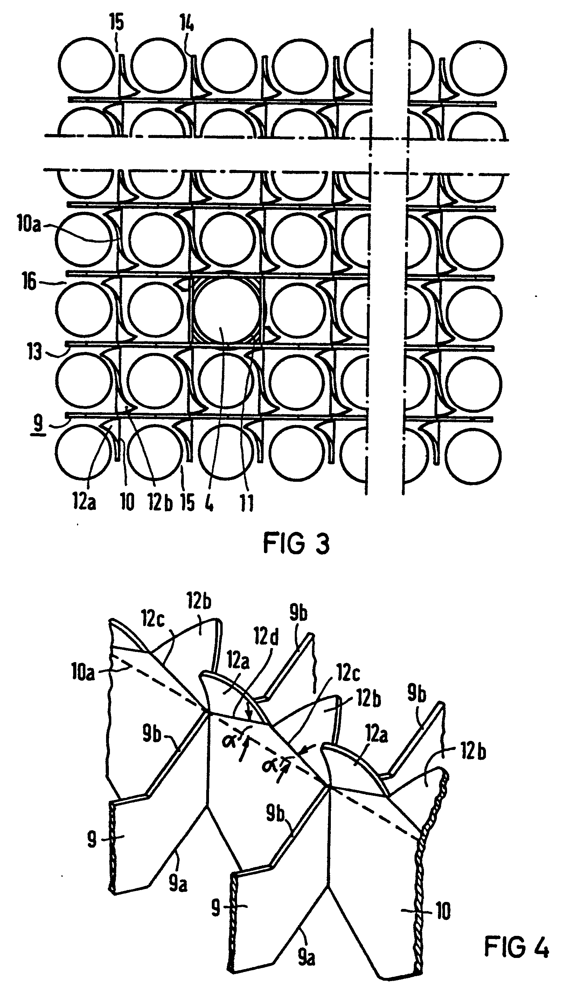

Wie insbesondere die Figuren 2 und 4 zeigen, haben die zueinander parallelen Blechstege 9 Zu- oder An-und Abströmkanten 9a und 9b, die Zacken 9c und 9d aufweisen. Diese Zacken 9c und 9d befinden sich bündig in der Ebene des betreffenden Blechsteges 9 und damit der Maschenseiten des Zusatzgitters 7, die durch diesen Blechsteg 9 gebildet sind. Die Zacken 9c und 9d der An- und Abströmkanten 9a und 9b der Blechstege 9 sind ferner zueinander parallel. An der Anströmkante 9a befindet sich jeweils zwischen zwei zueinander parallelen Blechstegen 10 ein Zacken 9c mit gleichlangen Schenkeln, die miteinander einen Winkel von 90° bilden. Diese Zacken 9c stehen entgegen der Anströmrichtung für das Kühlmittel in einem Kernreaktor. An der Abströmkante 9b der Blechstege 9 ist jeweils an einem der Blechstege 10 ein Zacken 9d ausgebildet, der gleichschenklig ist, jeweils einen der Schenkel auf jeder Seite des betreffenden Blechsteges 10 hat und zwischen den beiden Schenkeln einen Winkel von 90° bildet. Jede dieser Zacken 9d steht in Abströmrichtung des in einem Kernreaktor durch das Kernreaktorbrennelement strömenden Kühlmittels, so daß die Zacken 9c und 9d der zueinander parallelen An- und Abströmkanten 9a und 9b der zueinander parallelen Blechstege 9 des Zusatzgitters 7 zueinander versetzt sind.

Die zueinander parallelen Blechstege 10 des Zusatzgitters 7 tragen an den zueinander parallelen Abströmkanten 10a Verwirbelungsfahnen 12a und 12b. Jeweils zwei nebeneinander angebrachte Verwirbelungsfahnen 12a und 12b sind, wie insbesondere FIG 4 zeigt, zueinander entgegengesetzt um die Längsrichtung der Brennstäbe 8 und der Führungsrohre 4 verdrillt. An einer Kante einer Masche des Zusatzgitters 7 mit einem Brennstab 8 befinden sich jeweils zwei Verwirbelungsfahnen 12a und 12b, die jeweils am Ende der Kante der Masche spitz und über die zu dieser Kante gehörende, jeweils durch einen Blechsteg 10 gebildete Maschenseite hervorstehend zulaufen.

Die Biegelinien 12c und 12d, an denen die Verwirbelungsfahnen 12a und 12b über die Maschenseite des Zusatzgitters 7 hervorzustehen beginnen, sind, wie Figur 4 zeigt, gleich lang und schließen jede mit der betreffenden Abströmkante 10a der Blechstege 10 den gleichen Winkel α ein. Beide Biegelinien 12c und 12d befinden sich wie die Verwirbelungsfahnen 12a und 12b außen über der Abströmkante 10a der Blechstege 10.

Derartige Verwirbelungsfahnen können sich auch an der zur Abströmkante 10a parallelen Anströmkante der zueinander parallelen Blechstege 10 befinden.

Die Blechstege 9 und 10 des Zusatzgitters 7 bilden jeweils an ihren beiden Enden Laschen 13 und 14, mit denen das Zusatzgitter 7 zwischen die Brennstäbe 8 greift, die sich auf der Brennelementaußenseite 15 bzw. 16 befinden. Diese laschen 13 und 14 bilden Maschen, die seitlich nach außen offen sind und in denen sich jeweils ein Brennstab 8 befindet. Ferner sind die die Oberfläche des Zusatzgitters 7 in den Maschen bildenden, zur Längsrichtung der Brennstäbe 8 und des Steuerstabführungsrohres 4 parallelen Seiten der Blechstege 9 und 10 in vorteilhafter Weise glatt und/oder flach (z.B. ohne Anlagenoppen), so daß sie einer in Längsrichtung des Kernreaktorbrennelementes verlaufenden Kühlmittelströmung in einem Kernreaktor optimal wenig Widerstand entgegensetzen.

**Ansprüche**

1. Kernreaktorbrennelement mit zueinander parallelen Brennstäben und Führungsrohren für Steuerstäbe sowie mit zwei gitterförmigen Abstandhaltern (6) mit Maschen, durch die je ein Brennstab oder ein Führungsrohr (4) geführt ist und in denen der Brennstab (8) kraftschlüssig gehalten bzw. das Führungsrohr (4) befestigt ist, sowie mit einem mindestens an einem der Führungsrohre befestigten Zusatzgitter (7), das in Längsrichtung der Brennstäbe und Führungsrohre gesehen zwischen den beiden Abstandhaltern (6) angeordnet ist und Maschen aufweist, an deren Kanten Verwirbelungsfahnen (12a, 12b) angebracht sind und durch die je ein Brennstab (8) mit Spiel oder ein Führungsrohr (4) geführt ist, **dadurch gekennzeichnet,** daß die den Brennstäben und/oder Führungsrohren zugewandten Oberflächen des Zusatzgitters (7) in den Maschen glatt und flach sind und daß das Zusatzgitter (7) an den Brennelement außenserten nach außen offene marchen aufweist, in denen sichjeweils ein Brennstab oder Führungs rohe befindet.

2. Kernreaktorbrennelement nach Anspruch 1,

dadurch gekennzeichnet, daß zueinander parallele An- und/oder Abströmkanten (9a), (9b) des Zusatzgitters (9) Zacken (9c), (9d) aufweisen, die sich jeweils bündig in der Ebene einer Maschenseite des Zusatzgitters (9) befinden.

3. Kernreaktorbrennelement nach Anspruch 2, **dadurch gekennzeichnet, daß** die Zacken (9c) und (9d) der An- und/oder Abströmkanten (9a) und (9b) zueinander versetzt sind.

4. Kernreaktorbrennelement nach Anspruch 1, **dadurch gekennzeichnet, daß** das Zusatzgitter von beiden Abstandhaltern ungleichen Abstand hat.

5. Kernreaktorbrennelement nach Anspruch 1, **dadurch gekennzeichnet, daß** das Zusatzgitter (9) die Verwirbelungsfahnen (12a) und (12b) an zueinander parallelen An- und/oder Abströmkanten aufweist und daß jeweils zwei nebeneinander an einer der zueinander parallelen An-und/oder Abströmkanten des Zusatzgitters (9) angebrachte Verwirbelungsfahnen (12a) und (12b) zueinander entgegengesetzt um die Längsrichtung der Brennstäbe (8) und Führungsrohre (4) verdrillt sind, sich an einer Kante einer Masche des Zusatzgitters (7) für einen Brennstab (8) befinden und jeweils am Ende dieser Kante spitz und über die zu dieser Kante gehörende Maschenseite hervorstehend zulaufen.

## Revendications

1. Assemblage combustible de réacteur nucléaire, comprenant des crayons combustibles et des tubes-guides de crayons de contrôle parallèles entre eux, ainsi que deux entretoises en forme de grille (6) et ayant des mailles dans chacune desquelles est guidé un crayon combustible ou un tube-guide (4) et dans lesquelles le crayon combustible (8) est maintenu positivement ou le tube-guide (4) est fixé, ainsi qu'une grille supplémentaire (7) qui est fixée au moins à l'un des tubes-guides, qui est disposée, considéré suivant la direction longitudinale des crayons combustibles et des tubes-guides, entre les deux entretoises (6) et qui comporte des mailles sur les bords desquelles sont fixées des ailettes de tourbillonnement (12a, 12b) et dans chacune desquelles passe, avec jeu, un crayon combustible ou un tube-guide (4), caractérisé en ce que les surfaces, tournées vers les crayons combustibles et/ou vers les tubes-guides, de la grille supplémentaire (7) sont lisses et plates dans les mailles et en ce que la grille supplémentaire (7) comporte, du côté extérieur à l'assemblage combustible, des mailles ouvertes sur l'extérieur, dans lesquelles se trouvent respectivement un crayon combustible ou un tube-guide.

2. Assemblage combustible de réacteur nucléaire suivant la revendication 1, caractérisé en ce que des arêtes d'entrée (9a) et/ou de sortie (9b), parallèles entre elles, de la grille supplémentaire (9) comportent des dents (9c, 9d) qui se trouvent dans le plan d'un côté d'une maille de la grille supplémentaire (9).

3. Assemblage combustible de réacteur nucléaire suivant la revendication 2, caractérisé en ce que les dents (9c) et (9d) des arêtes d'entrée (9a) et/ou de sortie (9b) sont décalées les unes par rapport aux autres.

4. Assemblage combustible de réacteur nucléaire suivant la revendication 1, caractérisé en ce que la grille supplémentaire est à distance inégale des deux entretoises.

5. Assemblage combustible de réacteur nucléaire suivant la revendication 1, caractérisé en ce que la grille supplémentaire (9) comporte les ailettes de tourbillonnement (12a) et (12b) sur des arêtes d'entrée et/ou de sortie, parallèles entre elles, et en ce que deux ailettes de tourbillonnement (12a) et (12b), disposées côte à côte sur l'une des arêtes d'entrée et/ou de sortie parallèles entre elles de la grille supplémentaire (9), sont vrillées en sens opposé l'une de l'autre dans la direction longitudinale des crayons combustibles (8) et des tubes-guides (4), se trouvent sur une arête d'une maille de la grille supplémentaire (7) pour un crayon combustible (8) et se terminent en pointe à l'extrémité de cette arête en faisant saillie au delà du côté de la maille appartenant à cette arête.

## Claims

1. Nuclear reactor fuel element having mutually parallel fuel rods and guide tubes for control rods, having two lattice-like spacers (6) with mesh openings through each of which a fuel rod or a guide tube (4) passes and in which the fuel rod (8) is held by a force fit or the guide tube (4) secured, and an additional lattice (7) secured to at least one of the guide tubes, arranged, as seen in the longitudinal direction of the fuel rods and guide tubes, between the two spacers (6), and having mesh openings on the edges of which turbulence vanes (12a, 12b) are provided and through each of which a fuel rod (8) with play or a guide tube (4) passes, characterised in that the surfaces of the additional lattice (7) facing the fuel rods and/or guide tubes in the mesh openings are smooth and flat and that the additional lattice (7) has outwardly facing mesh openings on the exterior sides of the fuel element, in each of which is located a fuel rod or guide tube.

2. Nuclear reactor fuel element according to claim 1, characterised in that mutually parallel leading and/or trailing edges (9a), (9b) of the additional lattice (9) have points (9c), (9d), each of which is located flush in the plane of one lattice opening side of the additional lattice (9).

3. Nuclear reactor fuel element according to claim 2, characterised in that the points (9c) and (9d) of the

**EP 0 261 544 B1**

leading and/or trailing edges (9a) and (9b) are mutually offset.

4. Nuclear reactor fuel element according to claim 1, characterised in that the additional lattice is unequally spaced from the two spacers.

5. Nuclear reactor fuel element according to claim 1, characterised in that the additional lattice (9) has the turbulence vanes (12a) and (12b) on mutually parallel leading or trailing edges and in that in each case two adjacent turbulence vanes located on one of the mutually parallel leading or trailing edges of the additional lattice (9) are twisted in opposite directions to each other about the axis of the fuel rods (8) and guide tubes (4), are located on one edge of a mesh opening of the additional lattice (7) for a fuel rod (8) and in each case come to a point at the end of this edge, projecting over the mesh opening side associated with this edge.

FIG 1

FIG 2

FIG 3

FIG 4